# EUROPÄISCHE PATENTSCHRIFT

(11) **EP 1 927 806 B1**
(45) Veröffentlichungstag und Bekanntmachung des Hinweises auf die Patenterteilung: **18.03.2009**
(21) Anmeldenummer: 07023004.0
(22) Anmeldetag: 28.11.2007
(51) Int. Cl.: F16L 27/08, F16L 43/00, F16L 47/03

(54) **Vorrichtung zur Verbindung zweier Rohre**
Device for connecting two pipes
Dispositif destiné à relier deux tuyaux

(30) Priorität: 01.12.2006 DE 102006057212
(43) Veröffentlichungstag der Anmeldung: 04.06.2008
(73) Patentinhaber: DA-Kunststoff GmbH, 42859 Remscheid (DE)
(72) Erfinder: Hintzen, Werner, 50765 Köln (DE)
(74) Vertreter: Patentanwälte Buse, Mentzel, Ludewig

(56) Entgegenhaltungen:
- EP-A- 0 382 971
- DE-A1- 2 733 571
- DE-A1- 19 734 427
- DE-C1- 4 012 297

## Beschreibung

Die Erfindung richtet sich auf eine mechanische Verbindung zweier Rohre der im Oberbegriff des Anspruches 1 angegebenen Art.

Bei der Installation von Rohrleitungen werden diese in verschiedenen Richtungen verlegt. Hierbei müssen die Rohre untereinander an den Verbindungsstellen, meist mit Muffen, verbunden werden. Diese Muffen können zwei koaxial befindliche Rohre oder auch zwei Rohre, die in einem Winkel zueinander angeordnet sind, verbinden.

Allzu oft liegen die Rohre bei einer solchen Verbindung allerdings nicht in einem festen Winkel zueinander, sondern können in Winkeln von 0° bis 90° vorliegen. Hierzu gibt es laut dem Stand der Technik Winkelverbindungen mit variablem Verbindungswinkel. Hierbei bestehen die Winkelverbindungen aus zwei Bauteilen, die eine angeschrägte Fläche in Bezug auf die Verlaufsachse aufweisen. Die zwei Bauteile können an dieser Verbindungsfläche miteinander verbunden werden und ergeben so eine Winkelverbindung. Die beiden Bauteile sind drehbar gelagert, sodass verschiedenste Winkel eingestellt werden können. Nach dem Stand der Technik werden zur Abdichtung der Verbindungsfläche Gummiringe verwendet, sodass das Winkelstück zwar drehbar ist, es jedoch nicht zu Undichtigkeiten kommen sollte.

Schwachpunkt bei diesen Winkelverbindungsstücken sind eben genau diese Gummiringe, die zur Abdichtung verwendet werden, da sie mit der Zeit porös werden können und somit undicht werden können. Weiterhin besteht die Gefahr, dass auch nach Einbau des Winkelstückes in einem Rohrsystem der Winkel der Winkelverbindung sich durch die drehbar gelagerten Schrägflächen nachträglich verstellen kann und somit ungewünschte Kräfte auf das Winkelstück des Rohrsystems wirken können.

JP-05240394 zeigt eine Verbindung, bei der die Rohre mit Hilfe eines Kugelgelenkes ineinander greifen. Danach kann durch eine im Gelenk eingebrachte Heizwendel die Verbindung in einem vorher eingestellten Winkel fixiert werden. Durch die gelenkförmige Verbindung ist jedoch die Bewegungsfreiheit des Gelenkes eingeschränkt, da durch den äußeren Gelenkrand die Gelenkbewegung eingeschränkt ist. So sind Winkel von z.B. 90° nicht möglich.

DE-19734427 A1 zeigt eine ähnliche Verbindung wie JP-05240394, jedoch ist der äußere Gelenkrand kürzer ausgeprägt, wodurch eine leicht größere Winkelverstellung möglich wäre. 90° Winkel sind jedoch auch hier unmöglich. Da die Gelenkbewegung auch hier stark eingeschränkt ist, sind verschiedene Winkelstücke als Gelenk vorgesehen. Es muss also für jeden Winkelbereich ein eigenes Winkelstück produziert werden. Diese Maßnahme ist sehr aufwändig und teuer. Wesentlich ist ebenso, dass für diese Winkelverbindung bei variablen Winkeln bis zu 90° lediglich eine Verbindungsfläche benötigt wird.

Auch JP-06346997 zeigt eine ähnliche Vorrichtung. Hier ist der maximale Gelenkwinkel als α bezeichnet. Anhand der Zeichnungen lässt sich gut erkennen, dass auch hier das Gelenk keine allzu großen Winkel zulässt.

Bekannt ist aus dem europäischen Patent 0 382 971 A1 eine Rohrverbindung mittels eines Winkelstückes. Dieses Winkelstück wird dann mit den Rohrverbindungen thermisch verschweißt. Nachteilig bei dieser Erfindung ist jedoch, dass lediglich fest vorgegebene Radien verwirklicht werden können, nämlich der Radius des Winkelstückes. Außerdem sind für einen 90° Winkel zwei Schweißstellen erforderlich, was ein erhöhtes Sicherheitsrisiko darstellt, da jede Verbindungsstelle auch einem Alterungsprozess unterliegt.

Aufgabe der Erfindung ist es daher eine Vorrichtung zur Winkelverbindung für Rohrsysteme so zu gestalten, dass eine nachträgliche Verstellung des Winkels nicht stattfinden kann und auch auf Dauer eine dichte Winkelverbindung geschaffen werden kann. Ebenso sollen möglichst große Winkel realisiert werden können. Trotz allem soll die Winkelverbindung eine möglichst stabile Bauform haben und durch alle Arten auftretender Kräfte belastbar sein.

Die Aufgabe wird erfindungsgemäß durch eine Vorrichtung mit den Merkmalen des Anspruches 1 gelöst. Wesentlich ist, dass die angeschrägte Verbindungsfläche der beiden Winkelstücke aus Kunststoff besteht und in mindestens einer dieser Kunststoffflächen eine Heizdraht eingebracht ist, deren Enden an einem von außen zugänglichen Anschluss angebracht sind. Mit diesem Heizdraht ist es möglich, die beiden Kunststoffflächen in einem vorher eingestellten Winkel miteinander zu verschweißen, sodass eine form- und stoffschlüssige Verbindung entsteht. Diese Einstellung des Winkels kann sich nach dem Verschweißen nicht mehr ändern. Da die Verbindung stoffschlüssig ist und somit vollkommen dicht, ist es auch nicht notwendig, die Winkelverbindung durch einen Gummiring abzudichten.

Damit die beiden Winkelstücke der Winkelverbindung miteinander verbunden werden können, ist in einem bevorzugten Ausführungsbeispiel eine Schnappverbindung vorgesehen, mit deren Hilfe die beiden Teile der Winkelverbindung in Wirkverbindung miteinander gebracht werden. Diese Schnappverbindung besteht aus einem Anschlag an einem Winkelstück der Winkelverbindung und einem Gegenanschlag an dem zweiten Winkelstück der Winkelverbindung. In einem. Ausführungsbeispiel besteht der Anschlag aus einer radial nach innen gerichteten Kunststoffnase, die umfangsseitig um die Schrägfläche des einen Winkelstückes der Winkelverbindung verläuft und flexibel nach außen bewegbar ist, um einen freien Zugang zur darunterliegenden Ringnut zu ermöglichen. Hierein lässt sich der Gegenanschlag einlegen. Dieser kann z. B. an einer angeschrägten Fläche eine radial umlaufende Kante haben, welche beim Verbinden der beiden Winkelstücke die Nase der Schnappverbindung nach außen drückt. Die Nase legt sich über die Kante und hält somit das zweite Teil fest. Diese Schnappverbindung dient auch dazu, der Kraft beim entstehenden Druck durch das Verschweißen der beiden Kunststoffflächen entgegenzuwirken. Der Druck entsteht durch das Schmelzen des Kunststoffes. Flüssiger Kunststoff besitzt eine größere Volumenausdehnung und braucht somit mehr Platz als der feste Kunststoff. Somit treten in dem Bauteil Kräfte auf, die beide Winkelstücke auseinander drücken würden. Hier sorgt die Schnappverbindung dafür, dass die beiden Bauteile, auch bei auftretendem Druck, aneinander gehalten werden.

Die Öffnung in der Verbindungsfläche eines Winkelstückes ist dabei so aufgefräst, dass die Durchflussöffnung in der Verbindungsfläche ellipsenförmig erscheint. Dies ist notwendig, um einen optimalen Fluiddurchfluss bei montiertem Gelenkabgang zu ermöglichen. Durch die verschiedenen möglichen Winkelstellungen des Gelenkabgangs von bis zu 90° ist bei einer runden Durchflussöffnung gegebenenfalls der Fluss des Fluids gebremst. Diesem Effekt wird durch die Auffräsung der Durchflussöffnung entgegengewirkt.

Durch Zufuhr elektrischer Energie erhitzt der Heizdraht die Kunststofffläche und bringt sie so - zum zumindest bereichsweise - zum Schmelzen, wodurch die obengenannte formschlüssige und stoffschlüssige Verbindung entsteht. Vorteilhafterweise wird am Innenrand der Kunststofffläche und/oder am Außenrand der Kunststofffläche kein Heizdraht vorgesehen und somit eine sogenannte kalte Zone gelassen, in der kein Kunststoff geschmolzen wird. Auf diese Weise hat der flüssige Kunststoff genügend Platz um sich auszudehnen. Andererseits werden innenliegende sowie außenliegende Teile, wie z. B. die Schnappverbindung, nicht in Mitleidenschaft gezogen. Durch diese kalte Zone kann auch kein flüssiger Kunststoff nach außen treten.

Die Zufuhr elektrischer Energie geschieht durch das Anschließen einer geeigneten Spannungsquelle, z. B. einem Schweißgerät oder eine Batterie, an den dafür vorgesehenen Anschluss des Heizdrahtes, der beispielsweise als Buchse und/oder Stecker realisiert werden kann.

Des Weiteren kann ein Indikator an einem Winkelstück vorgesehen werden, welcher günstigerweise aus einem senkrecht zur Schweißstelle frei gelagerten Stift besteht, der durch den entstehenden Schweißdruck sichtbar und merkbar nach außen gedrückt wird. Hieran kann man ablesen, ob die Verbindung erfolgreich verschweißt wurde oder nicht.

Bei einem besonderen Ausführungsbeispiel der Erfindung sind die der Schrägfläche gegenüberliegenden Endstücke für das Rohrsystem ebenfalls verschweißbar. Dies geschieht durch einen eingebrachten Schweißdraht, der in einer Kunststoffzone im inneren Umfang des Endstücks vorgesehen ist, an dem das Rohr angeschlossen wird. Mit dem Schweißdraht kann man ein Rohr, das in das Endstück eingesteckt wird, verschweißen. Auch diese Schweißdrähte besitzen, ebenso wie die Heizdrähte, eine von außen zugängliche Anschlussstelle, die ebenfalls als Buchse oder Stecker realisiert werden kann. Somit kann man die Schweißstelle an den Kunststoffflächen sowie auch die Schweißstelle am Rohr mit der gleichen Spannungsquelle betreiben. In einem anderen Ausführungsbeispiel könnte das Rohr durch Stumpfschweißen an ein Winkelstück angeschweißt werden.

In den Zeichnungen ist der Erfindungsgegenstand in einem Ausführungsbeispiel dargestellt. Es zeigen
- Fig. 1: ein einzelnes Winkelstück mit Draufsicht auf die Schweißfläche;
- Fig. 2: eine Seitenansicht der Winkelverbindung in einer Winkelposition von 0°;
- Fig. 3: eine Seitenansicht der Winkelverbindung in einer Winkelverbindung mit einer Winkelstellung von 90°;
- Fig. 4: eine detaillierte, schematische Darstellung eines Schnappverschlusses zwischen zwei Winkelstücken.

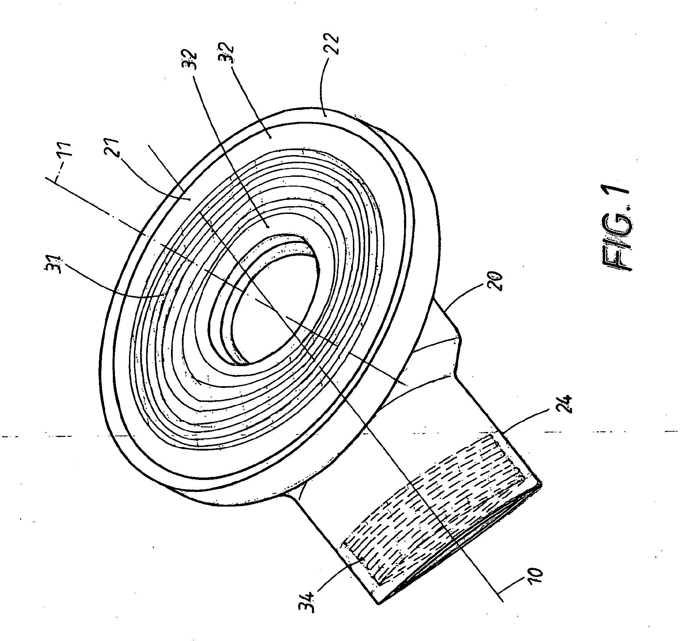

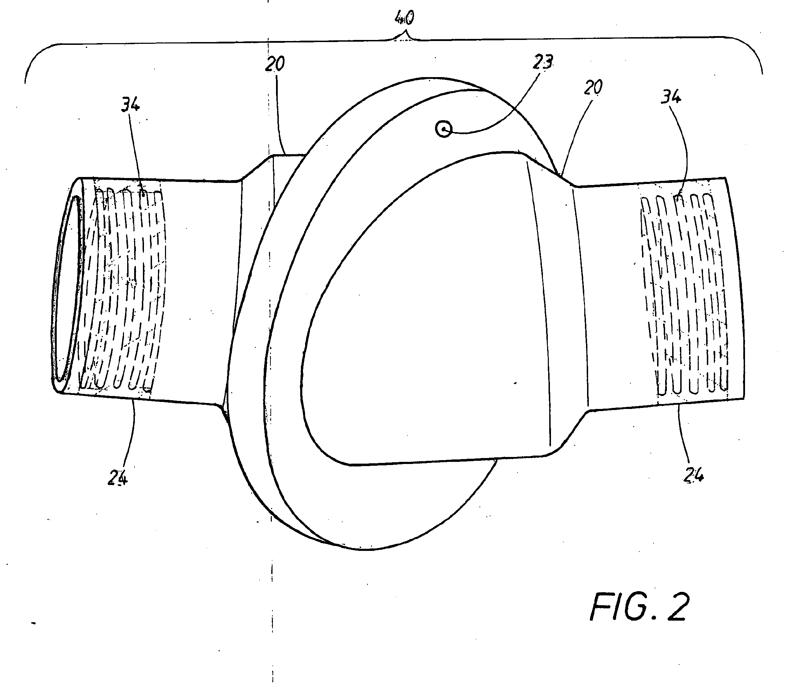

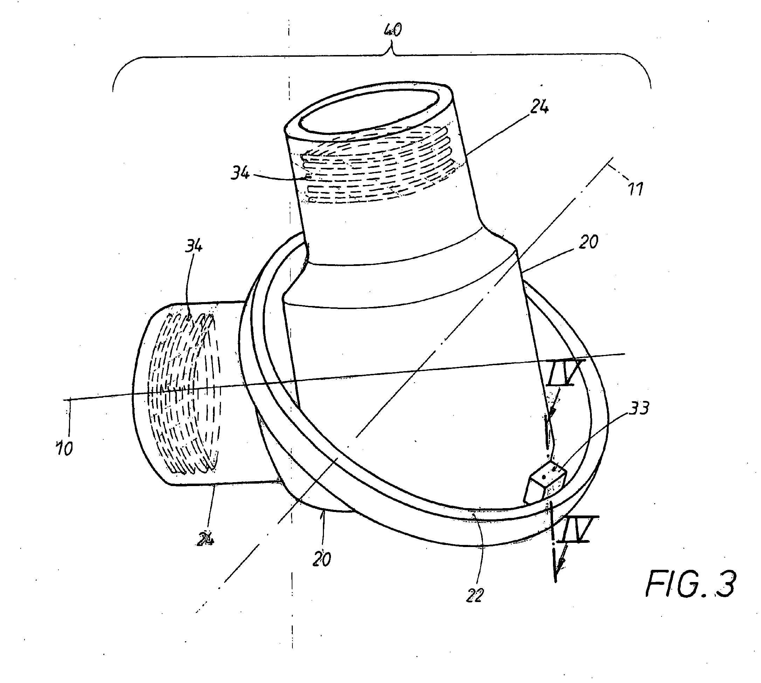

Die in den Zeichnungen dargestellte Winkelverbindung 40 besteht aus zwei, in Fig. 1 gezeigten Winkelstücken 20, die über die jeweilige Verbindungsfläche 21 verbunden werden können. Entlang der Verlaufsachse 10 besteht ein Winkelstück 20 aus einem Endstück 24 an das ein Rohr angeschlossen werden kann. Im weiteren Verlauf ist eine schräg zur Verlaufsachse 10 angeordnete Verbindungsfläche 21 angebracht. Die in den Fig. 2 bis 4 gezeigte Winkelverbindung 40 ist eine kraft- und formschlüssige Verbindung, erzielt über eine mechanische Schnappverbindung 22 zwischen den Winkelstücken 20 und über ein Schweißverbindung zwischen den Verbindungsflächen 21.

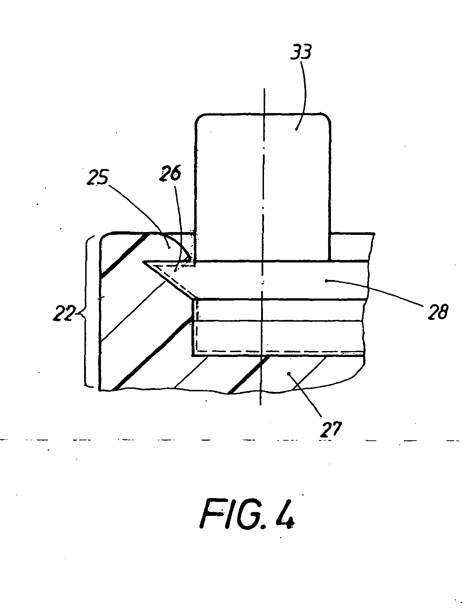

Vorzugsweise ist am Außenradius der Verbindungsfläche 21 eine Schnappverbindung 22 vorgesehen, siehe Fig. 4, welche die beiden zusammengesteckten Winkelstücke 20 zu einer kompletten Winkelverbindung 40 zusammenhält. Die beiden Winkelstücke 20 sind über diese Schnappverbindung 22 um die Mittelachse 11 drehbar gelagert, sodass im nicht zusammengeschweißten Zustand jeder beliebige Winkel, je nach Schräglage der Verbindungsfläche 21, eingestellt werden kann.

Das Loch in der Verbindungsfläche 21 ist ellipsenförmig, um einen besseren Durchfluss in der Winkelverbindung 40 zu ermöglichen.

Die Schnappverbindung 22 besteht in diesem Fall aus einem Anschlag 25 an einem Winkelstück 20 sowie einem Gegenanschlag 26 am anderen Winkelstück 20. In diesem Beispiel ist der Anschlag 25 der Schnappverbindung 22 als radial nach innen ausgerichtete Nase ausgeführt, die eine Ringnut begrenzt, in die das zweite Winkelstück 20 mit dem Gegenanschlag 26, hier als umlaufende Kante gezeichnet, eingesetzt wird. Die abgerundete Fläche des Anschlages 25 erleichtert hierbei das Einsetzen des Gegenanschlages 26. Einmal eingesetzt, rastet der Gegenanschlag 26 in die Nut unterhalb des Anschlages 25 ein und die beiden Winkelstücke 20 sind_über_ diese Schnappverbindung 22 zu einer Winkelverbindung 40 verbunden. Diese Winkelverbindung 40 ist jedoch noch drehbar und wird durch die nachfolgend beschriebene Verschweißung in einem vorgegebenen Winkel zu einer festen, dichten Verbindung.

Die Verbindungsfläche 21 besteht aus einer Kunststofffläche, in die ein Heizdraht 31 eingelassen ist. Dieser Heizdraht 31 wird üblicherweise als Heizwendel in die Kunststofffläche der Verbindungsfläche 21 eingebracht, kann aber auch andere Formen, wie z. B. eine bifilare Verlaufsform, annehmen.

Der Heizdraht 31 wird dazu verwendet, den Kunststoff der Verbindungsfläche 21 zu schmelzen und somit die beiden Winkelstücke an ihrer Verbindungsfläche 21 aneinander zu schweißen. Beim Schweißvorgang wird ein Schweißdruck erzeugt, der die Winkelstücke 20 auseinander drücken will, was jedoch durch die vorbeschriebene Schnappverbindung 22 verhindert wird.

Es wird jedoch nicht der gesamte Kunststoff der Verbindungsfläche 21 durch den Heizdraht 31 geschmolzen, sondern es existieren umlaufende Bereiche am Innensowie am Außenradius der Verbindungsfläche 21, in die kein Heizdraht 31 eingebracht wird. Diese Bereiche werden vom Heizdraht 31 nicht erwärmt und bilden kalte Zonen 32.

An den Endstücken 24 der Winkelstücke 20 kann ebenfalls im Innenradius ein umlaufender Schweißdraht 34 angebracht sein, der ebenfalls in Kunststoff eingelassen wird. Dadurch ist es möglich, die angeschlossenen Rohre mit der Winkelverbindung 40 zu verschweißen. Um festzustellen, dass eine Verbindung erfolgreich verschweißt wurde, ist ein Indikator implementiert, welcher mechanisch anzeigt, ob eine Schweißverbindung erfolgreich war oder nicht. Dieser besteht z. B. aus einem Plastikstift, der frei beweglich, senkrecht zur Schweißfläche gelagert ist und durch den Druck sichtbar nach außen gedrückt wird.

Die Schweißdrähte 34 und die Heizdrähte 31 sind an einem Anschluss außerhalb der Winkelverbindung 40 angeschlossen, z. B. eine Buchse 33. Hieran kann eine geeignete Spannungsquelle zum Verschweißen der Winkelverbindung 40 angeschlossen werden.

Auf den Zeichnungen ist der Erfindungsgegenstand nur beispielsweise verwirklicht. Dieser ist nicht darauf beschränkt. Vielmehr sind noch mancherlei Abänderungen möglich. Beispielsweise könnten die Winkelstücke 20 komplett aus Kunststoff bestehen oder nur die Flächen mit eingelassenem Schweißdraht 34 bzw. Heizdraht 31. Ebenso könnten die Winkelstücke 20 an einer Armatur vormontiert und/oder Rohre direkt einem Winkelstück 20 angeordnet sein.

### Bezugszeichenliste:

- 10: Verlaufsachse
- 11: Mittelachse
- 20: Winkelstück
- 21: Verbindungsfläche
- 22: Schnappverbindung
- 23: Indikator
- 24: Endstück
- 25: Anschlag
- 26: Gegenanschlag
- 27: Teil der Verbindungsfläche eines Winkelstücks
- 28: Kragen
- 31: Heizdraht
- 32: kalte Zone
- 33: Buchse
- 34: Scheißdraht
- 40: Winkelverbindung

## Patentansprüche

1. Vorrichtung zur Verbindung zweier Rohre zum Transport von Fluiden mit zwei miteinander verbindbaren Winkelstücken (20),
von denen jedes eine Verbindungsfläche (21) aufweist,
wobei jedes der Winkelstücke (20) im verbundenen Zustand um die Mittelachse (11) der Verbindungsflächen (21) drehbar gelagert ist,
mit je einem Endstück (24) pro Winkelstück (20) an dem ein Rohr anschließbar ist,
wobei die Verbindungsfläche (21) der Winkelstücke (20) aus Kunststoff besteht,
wobei in mindestens einer der Verbindungsflächen (21) eine oder mehrere elektrische Heizdrähte (31) angeordnet sind, die über Anschlussenden verfügen, welche aus dem Winkelstück (20) heraus geführt sind,
wobei mit diesen Heizdrähten (31) durch Zufuhr elektrischer Energie der Kunststoff der Verbindungsfläche (21) zum Teil zum Schmelzen gebracht werden kann
und die beiden Winkelstücke (20) beim Erkalten miteinander verschweißbar sind, wobei eine dichte kraft- und stoffschlüssige Verbindung entsteht, bei der die Position der Winkelstücke (20) zueinander nicht mehr veränderbar ist.
**dadurch gekennzeichnet,**
**dass** jede Verbindungsfläche in einer Ebene angebracht ist, die sich schräg zur Verlaufsachse (10) des jeweiligen Winkelstückes (20) befindet,
wobei die zwei Winkelstücke (20) über die Verbindungsflächen (21) miteinander in Wirkverbindung gebracht werden,
wobei diese Wirkverbindung über eine mechanische Schnappverbindung (22) zu
Stande kommt, worin die Winkelstücke (20) drehbar gelagert sind,
wobei ein Winkelstück (20) mit einem Anschlag (25) und das andere Winkelstück (20) mit einem Gegenanschlag (26) am umlaufenden Kragen (28) ausgerüstet ist, sodass beim Schweißvorgang die Schnappverbindung (22) der entstehenden Druckkraft entgegenwirkt.

2. Vorrichtung nach Anspruch 1, **dadurch gekennzeichnet, dass** die Öffnungen in den Verbindungsflächen (21) der Winkelstücke (20) ellipsenförmig gestaltet sind.

3. Vorrichtung nach Anspruch 1 oder 2, **dadurch gekennzeichnet, dass** die Heizdrähte (31) so angeordnet sind, dass eine sogenannte kalte Zone (32) am inneren und/oder äußeren Rand gebildet wird, in der kein Kunststoff geschmolzen wird, um einen Austritt von flüssigem Kunststoff aus der Vorrichtung zu verhindern.

4. Vorrichtung nach einem der Ansprüche 1 bis 3, **dadurch gekennzeichnet, dass** die Heizdrähte (31) bifilar in den Verbindungsflächen (21) angeordnet sind.

5. Vorrichtung nach einem der Ansprüche 1 bis 4, **dadurch gekennzeichnet, dass** ein Anschluss des Heizdrahtes (31) als Buchse (33) an dem entsprechenden Winkelstück (20) ausgebildet ist, durch welche der Heizdraht (31) aus dem Winkelstück (20) herausgeführt ist.

6. Vorrichtung nach einem der Ansprüche 1 bis 5, **dadurch gekennzeichnet, dass** die Winkelstücke (20) aus Kunststoff bestehen.

7. Vorrichtung nach Anspruch 6, **dadurch gekennzeichnet, dass** am Endstück (24) für das Rohr ebenfalls ein oder mehrere Schweißdrähte (34) zum Verschweißen mit dem Rohr angebracht sind.

8. Vorrichtung nach einem der Ansprüche 6 oder 7, **dadurch gekennzeichnet, dass** diese Schweißdrähte (34) über Anschlussstellen, wie beispielsweise eine Buchse (33), aus dem entsprechenden Winkelstück (20) herausgeführt sind.

9. Vorrichtung nach einem der Ansprüche 1 bis 8, **dadurch gekennzeichnet, dass** im Bereich der angeordneten Heizdrähte (31) und/oder Schweißdrähte (34) ein oder mehrere Indikatoren (23) angebracht sind, die anzeigen, ob die Verschweißung erfolgreich war.

10. Vorrichtung nach Anspruch 9 **dadurch gekennzeichnet, dass** der Indikator (23) aus einem Kunststoffstift besteht, der freibeweglich senkrecht zur Verbindungsfläche (21) gelagert ist und durch den Schweißdruck nach außen verschiebbar ist.

11. Vorrichtung nach Anspruch 1 bis 10, **dadurch gekennzeichnet, dass** die Vorrichtung an einer Armatur vormontierbar ist.

## Claims

1. Device for connecting two pipes for the transport of fluids, with two angle pieces (20) that can be connected to each other,
each of which has a connecting surface (21),
each connecting surface being placed in a plane which is oblique relative to the flow axis (10) of the respective angle piece (20),
with each of the angle pieces (20) in the connected state being rotatably supported about the central axis (11) of the connecting surfaces (21)
with one end piece (24) for each angle piece (20) being connected to one pipe,
with the connecting surface (21) of the angle pieces (20) consisting of plastic,
with one or more electrical heating wires (31) , which have terminal ends which are led out of the angle piece (20), being arranged in at least one of the connecting surfaces (21),
with it being possible for the plastic of the connecting surface (21) to be partially melted by these hot wires (31) due to the application of electrical energy
and with the both angle pieces (20) being able to weld together on cooling, with a force-fit positive bond being thus produced, so that the position of the angle pieces (20) relative to each other can no longer be changed,
**characterized in that**
the two angle pieces (20) are brought to an effective connection with each other by means of the connecting surfaces (21),
with this effective connection being brought about by a mechanical snap-on connection (22), in which the angle pieces (20) are rotatably seated,
with one angle piece (20) being provided with a stop (25) and the other angle piece (20) being provided with an opposite stop (26) on the circumferential collar (28), so that the snap-on connection (22) counteracts the compressive force resulting during the welding process.

2. Device according to Claim 1, **characterized in that** the openings in the connecting surfaces (21) of the angle pieces (20) are ellipsoidal.

3. Device according to Claim 1 or 2, **characterized in that** heating wires (31) are arranged so that a cold zone (32), as it is called, because no plastic is melted, is formed on the inner and/or outer edge, in order to prevent the egress of liquid plastic from the device.

4. Device according to one of Claims 1 to 3, **characterized in that** the heating wires (31) are arranged in a bifilar manner in the connecting surfaces (21).

5. Device according to one of Claims 1 to 4, **characterized in that** one terminal of the heating wire (31) is designed as a socket (33) on the corresponding angle piece (20), through which the heating wire (31) is led out from the angle piece (20).

6. Device according to one of Claims 1 to 5, **characterized in that** the angle piece (20) is made of plastic.

7. Device according to Claim 6, **characterized in that** one or more heating wires (34) for welding to the pipe is/are also provided on the end piece (24) for welding to the pipe.

8. Device according to one of Claims 6 or 7, **characterized in that** the heating wires (34) are led out via terminal points, such as a socket (33), from the relevant angle piece (20).

9. Device according to one of Claims 1 to 8, **characterized in that** one or more indicators (23), which indicate whether the weld was successful, is provided in the area of the arranged heating wires (31) and/or welding wires (34).

10. Device according to Claim 9, **characterized in that** the indicator (23) consist of a plastic pin which is mounted so that it can move freely vertical to the connecting surface (21) and can be pushed outwards by the weld pressure.

11. Device according to Claim 1 to 10, **characterized in that** the device can be pre-mounted on a fitting.

## Revendications

1. Dispositif servant à relier deux tuyaux, destinés à transporter des fluides, au moyen de deux pièces coudées (20) reliables entre elles,
chacune présentant une surface de jonction (21),
chacune des pièces coudées (20) reposant, à l'état relié, en appui lui permettant de tourner autour de l'axe médian (11) des surfaces de jonction (21),
avec, pour chaque pièce coudée (20), une extrémité (24) à laquelle il est possible de raccorder un tube,
la surface de jonction (21) des pièces coudées (20) étant en matière plastique,
un ou plusieurs fils électriques chauffants (31) étant agencés dans au moins l'une des surfaces de jonction (21) et disposant d'extrémités de branchement qui sortent de la pièce coudée (20),
ces fils chauffants (31) permettant, par apport d'énergie électrique, de faire fondre en partie la matière plastique composant la surface de jonction (21),
et les deux pièces coudées (20) étant soudables entre elles lorsque la matière plastique refroidit, ce qui crée une jonction étanche opérant par adhérence de forces et de matières, et fait que la position réciproque des deux pièces coudées (20) n'est plus modifiable,
**caractérisé en ce que**
chaque surface de jonction est fixée sur un plan situé en biais par rapport à l'axe (10) du tracé de chaque pièce de jonction (20) respective,
les deux pièces coudées (20) étant amenées en jonction active l'une avec l'autre par le biais des surfaces de jonction (21),
cette jonction active étant réalisée par une jonction mécanique à déclic (22) dans laquelle les pièces coudées (20) reposent en appui rotatif,
une pièce coudée (20) étant équipée d'une butée (25) et l'autre pièce coudée (20) étant équipée d'une butée antagoniste (26) contre le col périphérique (28), de sorte que pendant la séquence de soudage la jonction à déclic (22) contrecarre la force de compression engendrée.

2. Dispositif selon la revendication 1, **caractérisé en ce que** les orifices ménagés dans les surfaces de jonction (21) des pièces coudées (20) ont reçu une forme elliptique.

3. Dispositif selon la revendication 1 ou 2, **caractérisé en ce que** les fils chauffants (31) sont agencés de sorte à former une zone dite froide (32) sur le bord intérieur et/ou extérieur, zone sur laquelle aucune fusion de matière plastique n'a lieu, ceci pour empêcher que la matière plastique liquide sorte du dispositif.

4. Dispositif selon l'une des revendications 1 à 3, **caractérisé en ce que** les fils chauffants (31) sont agencés bifilaires dans les surfaces de jonction (21).

5. Dispositif selon l'une des revendications 1 à 4, **caractérisé en ce qu'**un raccordement du fil chauffant (31) est réalisé sous forme de prise (33) contre la pièce coudée (20) correspondante, prise par laquelle le fil chauffant (31) sort de la pièce coudée (20).

6. Dispositif selon l'une des revendications 1 à 5, **caractérisé en ce que** les pièces coudées (20) sont en matière plastique.

7. Dispositif selon la revendication 6, **caractérisé en ce que** contre la pièce terminale (24) recevant le tube a/ont été également fixé(s) un ou plusieurs fils (34) destiné(s) à réaliser le soudage avec le tube.

8. Dispositif selon l'une des revendications 6 ou 7, **caractérisé en ce que** ces fils à souder (34) sortent de la pièce coudée (20) correspondante par des points de branchement tels que par exemple une prise (33).

9. Dispositif selon l'une des revendications 1 à 8, **caractérisé en ce que** dans la zone des fils chauffants (31) agencés et/ou des fils de soudage (34) se trouve(nt) un ou plusieurs indicateur(s) (23) indiquant si le soudage a réussi.

10. Dispositif selon la revendication 9, **caractérisé en ce que** l'indicateur (23) se compose d'une tige en plastique reposant en appui mobile perpendiculairement à la surface de jonction (21), et qui peut se déplacer vers l'extérieur sous l'effet de la pression de soudage.

11. Dispositif selon les revendications 1 à 10, **caractérisé en ce que** le dispositif se laisse monter d'avance contre une robinetterie.
